# EUROPÄISCHE PATENTSCHRIFT

(11) **EP 2 140 197 B1**
(45) Veröffentlichungstag und Bekanntmachung des Hinweises auf die Patenterteilung: **01.03.2017**
(21) Anmeldenummer: 08735007.0
(22) Anmeldetag: 03.04.2008
(51) Int. Cl.: F21V 21/04

(54) **BEFESTIGUNGSELEMENT FÜR EINE EINBAULEUCHTE**
MOUNTING ELEMENT FOR A BUILT-IN LIGHT
ÉLÉMENT DE FIXATION POUR LUMINAIRE ENCASTRABLE

(30) Priorität: 03.05.2007 DE 102007020785; 06.08.2007 DE 102007036979
(43) Veröffentlichungstag der Anmeldung: 06.01.2010
(73) Patentinhaber: Zumtobel Lighting GmbH, 6851 Dornbirn (AT); Zumtobel Lighting GmbH, 32657 Lemgo (DE)
(72) Erfinder: LADSTÄTTER, Gerald, A-6833 Klaus (AT); SCHWÄRZLER, Erich, A-6932 Langen bei Begrenz (AT); EIDAM, Michael, 31812 Bad Pyrmont (DE)
(74) Vertreter: Thun, Clemens
(86) Internationale Anmeldenummer: PCT/EP2008/002672
(87) Internationale Veröffentlichungsnummer: WO 2008/135126

(56) Entgegenhaltungen:
- EP-A- 1 310 730
- EP-A- 1 321 707
- EP-A2- 0 870 982
- DE-A1- 10 360 948
- DE-U1- 29 819 888
- JP-A- 1 163 903
- JP-A- 11 224 527
- US-A- 4 250 540

## Beschreibung

Die Erfindung betrifft ein Befestigungselement für eine Einbauleuchte, die zum Einbau in eine Einbauöffnung vorgesehen ist, wobei das Befestigungselement ein Basisteil und ein Verriegelungselement aufweist. Das Verriegelungselement kann dabei relativ zu dem Basisteil aus einer Montageposition in eine Verriegelungsposition bewegt werden, wobei eine entsprechende Einbauleuchte, die mit dem Befestigungselement bestückt ist, in die Einbauöffnung eingeführt werden kann, falls sich das Verriegelungselement in der Montageposition befindet, und in einer vorgesehenen Einbauposition in der Einbauöffnung fixiert ist, falls sich das Verriegelungselement in der Verriegelungsposition befindet. Weiterhin betrifft die Erfindung eine Einbauleuchte, die mit einem derartigen Befestigungselement bestückt ist.

Einbauleuchten, die für einen Einbau in abgehängte Decken vorgesehen sind, zum Beispiel Wannenleuchten, werden zur Montage üblicherweise entweder von oben in eine entsprechende Deckeneinbauöffnung eingelegt oder von unten durch die Einbauöffnung eingeführt, an die Decke angeschlagen und mit Befestigungselementen auf dem Deckenträger befestigt. Die genannten Befestigungselemente werden daher nicht in jedem Fall benötigt, sondern im Allgemeinen nur für den Fall, dass ein Einbau von unten vorgesehen ist.

Falls ein Einbau mit Befestigungsmitteln vorgesehen ist, werden diese üblicherweise zunächst an den Außenflächen des Gehäuses der Leuchte angebracht. Ein Auslösen und Festklemmen der Befestigungselemente an der Decke kann jedoch nur bei geöffneter Leuchte, d.h. ohne eingesetzte Lampeneinheit erfolgen. Es besteht also bei der Montage die Notwendigkeit, zunächst die Leuchte so zu zerlegen, dass das Gehäuse der Leuchte von der im Gehäuse vorgesehenen Lampeneinheit - gegebenenfalls mit Zubehör - getrennt ist. In einem weiteren Schritt wird dann das Gehäuse an der Decke montiert, wobei die Befestigungselemente an der Decke durch Auslösen und Festklemmen befestigt werden, und schließlich wird die Lampeneinheit, gegebenenfalls mit Zubehör, in das Gehäuse eingesetzt. Eine entsprechende Deckeneinbauleuchte ist aus der deutschen Gebrauchsmusterschrift DE 298 19 888 U1 bekannt.

Ähnlich ist die Situation bei Einbaustrahlern oder Downlights. Ein Unterschied zu dem oben dargestellten Fall bei Wannenleuchten besteht jedoch darin, dass die betreffenden Befestigungselemente in der Regel nicht als Teile vorgesehen sind, die lösbar am Gehäuse befestigt sind, also insoweit fest mit dem Gehäuse verbunden sind.

Eine Einbauhalterung für eine Einbauleuchte ist aus der deutschen Offenlegungsschrift DE 197 15 068 A1 bekannt. Die Einbauhalterung umgibt dabei im zusammengebauten Zustand der Leuchte einen Leuchtenkörper mit zwei Reflektorteilen. Die Einbauhalterung weist zwei Drehriegel auf, die aus einer ersten Stellung, in der sich die Einbauhalterung durch eine Einbauöffnung in einen Deckenhohlraum einsetzen lässt, in eine Verriegelungsstellung gebracht werden können, in der die Drehriegel eine Hinterschnittfläche des Deckenhohlraums übergreifen. Beim Einbau der Leuchte muss der Leuchtenkörper zunächst von der Einbauhalterung getrennt sein, weil die Drehriegel dabei mit einer Hand bewegt werden müssen.

Aus der JP 1 163903 A ist eine Einbauleuchte mit einem Gehäuse und einem Halteelement zur Halterung der Leuchte in der Einbauöffnung bekannt. Das Halteelement ist relativ zu dem Gehäuse zwischen zwei End-Positionen hin und her drehbar gelagert, wobei die Leuchte im eingebauten Zustand durch das Halteelement in der Einbauöffnung gehalten ist, wenn sich das Halteelement in einer dieser End-Positionen befindet. Das Halteelement ist mit einer Feder verbunden, die das Halteelement in Abhängigkeit von seiner Drehlage in die eine oder die andere EndPosition zieht.

Aus der JP 11 224527 A ist eine Einbauleuchte mit einem Federelement bekannt, das durch einen Schieber beim Einbau der Leuchte in eine Einbauöffnung in sich gespannt wird. Im eingebauten Zustand ist die Leuchte in der Einbauöffnung durch das gespannte Federelement gehalten.

Aus der DE 103 60 948 A1 ist eine Einbauleuchte mit einem Gehäuserahmen und einem, schwenkbar an dem Gehäuserahmen gelagerten Funktionsrahmen bekannt. Zwischen diesen beiden Rahmen ist eine Verschlussanordnung mit einer Drahtfeder vorgesehen.

Der Erfindung liegt die Aufgabe zu Grunde, ein Befestigungselement für eine Einbauleuchte anzugeben, das eine einfachere und dabei sichere und komfortable Montage der Einbauleuchte ermöglicht, sowie eine Einbauleuchte mit einem derartigen Befestigungselement.

Diese Aufgabe wird gemäß der Erfindung mit den in den unabhängigen Ansprüchen genannten Gegenständen gelöst. Bevorzugte Ausführungsarten sind in den abhängigen Ansprüchen angegeben.

Gemäß der Erfindung ist ein Befestigungselement für eine Einbauleuchte vorgesehen, wobei die Einbauleuchte zum Einbau in eine Einbauöffnung vorgesehen ist. Das Befestigungselement weist dabei ein Basisteil und ein Verriegelungselement auf, das relativ zu dem Basisteil aus einer Montageposition in eine Verriegelungsposition bewegt werden kann. Eine entsprechende Einbauleuchte, die mit dem Befestigungselement bestückt ist, kann dabei in die Einbauöffnung eingeführt werden, falls sich das Verriegelungselement in der Montageposition befindet, und ist in einer vorgesehenen Einbauposition in der Einbauöffnung fixiert, falls sich das Verriegelungselement in der Verriegelungsposition befindet. Weiterhin sind Mittel zur selbstständigen Bewegung des Verriegelungselements von der Montageposition in die Verriegelungsposition vorgesehen.

Durch das Vorsehen der Mittel zur selbstständigen Bewegung des Verriegelungselements von der Montageposition in die Verriegelungsposition wird ermöglicht, dass beim Einbau einer Einbauleuchte, die mit dem Befestigungselement bestückt ist, nach Positionierung der Einbauleuchte in die vorgesehene Position relativ zu der Einbauöffnung, also in die vorgesehene Einbauposition, kein weiterer Montageschritt mehr notwendig ist.

Insbesondere ist kein nachträgliches Einsetzen einer Lampeneinheit oder dergleichen notwendig.

Erfindungsgemäß weisen die Mittel zur selbstständigen Bewegung des Verriegelungselements dabei ein Speicherelement für Energie auf, beispielsweise ein Speicherelement für elektrische Energie oder Deformationsenergie. Erfindungsgemäß ist dabei das Speicherelement dazu ausgelegt, mindestens soviel Energie zu speichern, wie zur Durchführung der Bewegung des Verriegelungselements von der Montageposition in die Verriegelungsposition erforderlich ist. Dabei ist das Speicherelement dazu ausgelegt, soviel Energie zu speichern, dass damit zusätzlich eine Fixierung der Einbauleuchte in der Einbauposition möglich ist. Dabei kann zur Fixierung der Einbauleuchte ein Aufbringen einer entsprechenden Haltekraft vorgesehen sein.

Beispielsweise kann das Speicherelement eine Feder, vorzugsweise eine Spiralfeder umfassen.

Vorteilhaft weist das Befestigungselement weiterhin ein Auslöseelement zur Aktivierung der Mittel zur selbstständigen Bewegung des Verriegelungselements auf. Das Auslöseelement kann dabei vorteilhaft derart angeordnet sein, dass die Mittel zur selbstständigen Bewegung des Verriegelungselements aktiviert werden, sobald die mit dem Befestigungselement bestückte Einbauleuchte in die vorgesehene Einbauposition gebracht wird.

Das Auslöseelement kann dabei weiterhin vorteilhaft derart ausgebildet sein, dass durch einen Druck auf einen Bereich des Auslöseelements die selbstständige Bewegung des Verriegelungselements von der Montageposition in die Verriegelungsposition ausgelöst wird.

Beispielsweise kann das Auslöseelement dabei zwischen einer Auslösebereitschaftsstellung und einer Auslösestellung verschiebbar am Basisteil angeordnet sein, wobei durch eine Bewegung des Auslöseelements von der Auslösebereitschaftsstellung in die Auslösestellung die selbstständige Bewegung des Verriegelungselements von der Montageposition in die Verriegelungsposition ausgelöst wird.

Vorteilhaft ist das Auslöseelement in einer Richtung verschiebbar am Basisteil angeordnet, die entgegengesetzt zu einer weiteren Richtung verläuft, in der die entsprechende Einbauleuchte auf einem letzten Bewegungsabschnitt bei einer Bewegung in die vorgesehene Einbauposition bewegt wird.

Dadurch ist es auf einfache Weise ermöglicht, dass bei einer Bewegung der Einbauleuchte in die vorgesehene Einbauposition das Auslöseelement durch einen Druck der Einbauleuchte gegen ein Deckenelement oder dergleichen, das den Rand der Einbauöffnung bildet, in die Auslösestellung bewegt wird und auf diese Weise die selbstständige Bewegung des Verriegelungselements von der Montageposition in die Verriegelungsposition ausgelöst wird. Beispielsweise kann dabei vorgesehen sein, dass der vorstehende Bereich in diejenige Richtung vorsteht, in die die Einbauleuchte auf einem letzten Bewegungsabschnitt bei einer Bewegung in die vorgesehene Einbauposition bewegt wird. Beispielsweise kann also im Fall einer Deckeneinbauleuchte vorgesehen sein, dass der vorstehende Bereich - bei vorgesehener Einbau-Ausrichtung der Leuchte bezüglich der Vertikalen - nach oben vorsteht und bei einer Bewegung der Einbauleuchte so gegen einen nach unten gerichteten Teil der Decke gedrückt wird, dass dadurch die Auslösung erfolgt.

Weiterhin erfindungsgemäß ist eine doppelte Sperrmöglichkeit der Mittel zur selbstständigen Bewegung des Verriegelungselements von der Montageposition in die Verriegelungsposition vorgesehen.

Weiterhin vorteilhaft sind Dämpfungsmittel zur Dämpfung der Bewegung des Verriegelungselements von der Montageposition in die Verriegelungsposition vorgesehen. Die Dämpfungsmittel können dabei einen Gasdämpfer und/oder eine Reibbremse umfassen.

Die Erfindung wird im Folgenden anhand von Ausführungsbeispielen und mit Bezug auf die Zeichnungen näher erläutert. Es zeigen:
- Fig. 1: ein erstes Ausführungsbeispiel eines erfindungsgemäßen Befestigungselements, montiert an einem wannenförmigen Gehäuse einer Einbauleuchte, von außerhalb des Gehäuses,
- Fig. 2: wie Fig. 1, jedoch von innerhalb des Gehäuses,
- Fig. 3a: eine schematische Seitenansicht des Befestigungselements aus Fig. 1 von außen, mit entsprechendem Deckenträger, vor Einbau der Leuchte,
- Fig. 3b: wie Fig. 3a, jedoch von innen,
- Fig. 4a: wie Fig. 3a, jedoch bei Anschlag des Auslöseelements von außen gegen den Deckenträger,
- Fig. 4b: wie Fig. 4a, jedoch von innen,
- Fig. 5a: wie Fig. 4a, jedoch bei Bewegung des Verriegelungselements in die Verriegelungsposition,
- Fig. 5b: wie Fig. 5a, jedoch von innen,
- Fig. 6a: in wie Fig. 4a, jedoch in Verriegelungsposition,
- Fig. 6b: wie Fig. 6b, jedoch von innen,
- Fig. 7a: wie Fig. 6a, jedoch bei einem Deckenträger geringerer Vertikalerstreckung,
- Fig. 7b: wie Fig. 7a, jedoch von innen,
- Fig. 8a: wie Fig. 7a, jedoch in einer Steckposition,
- Fig. 8b: wie Fig. 8a, jedoch von innen,
- Fig. 9: eine erste perspektivische Ansicht eines zweiten Ausführungsbeispiels eines erfindungsgemäßen Befestigungselements,
- Fig. 10: eine zweite perspektivische Ansicht des Befestigungselements aus Fig. 9,
- Fig. 11: eine dritte perspektivische Ansicht des Befestigungselements aus Fig. 9,
- Fig. 12: eine perspektivische Detailansicht des Befestigungselements aus Fig. 9,
- Figuren 13 und 14: zwei perspektivische Ansichten des Befestigungselements aus Fig. 9 im doppelt gesperrten Zustand

- Figuren 15 und 16: wie Figuren 13 und 14, jedoch nach Lösen einer Sperre
- Figuren 17 und 18: das Befestigungselement aus Fig. 9 nach Lösen beider Sperren,
- Fig. 19 und 20: das Befestigungselement aus Fig. 9 mit ausgeschwenktem Verriegelungselement 5,
- Fig. 21: das Befestigungselement aus Fig. 9, wobei sich das Verriegelungselement 5 in Montageposition befindet,
- Figuren 22 und 23: zwei perspektivische Ansichten eines dritten Ausführungsbeispiels eines erfindungsgemäßen Befestigungselements,
- Fig. 24: eine Querschnittdarstellung des Befestigungselements aus Fig. 22 mit ausgeschwenktem Verriegelungselement,
- Fig. 25: eine perspektivische Ansicht des Befestigungselements aus Fig. 22, wobei sich das Verriegelungselement in Montageposition befindet,
- Fig. 26: eine perspektivische Ansicht eines oberen Bereichs des Führungsstiftes des Befestigungselements aus Fig. 22,
- Fig. 27: eine perspektivische Ansicht des Verriegelungselements 5 des Befestigungselements aus Fig. 22,
- Fig. 28: eine perspektivische Ansicht des Auslöseelements 9 des Befestigungselements aus Fig. 22,
- Figuren 29 und 30: zwei perspektivische Ansichten eines vierten Ausführungsbeispiels eines erfindungsgemäßen Befestigungselements, und

- Figuren 31 und 32: zwei perspektivische Ansichten eines fünften Ausführungsbeispiels eines erfindungsgemäßen Befestigungselements.

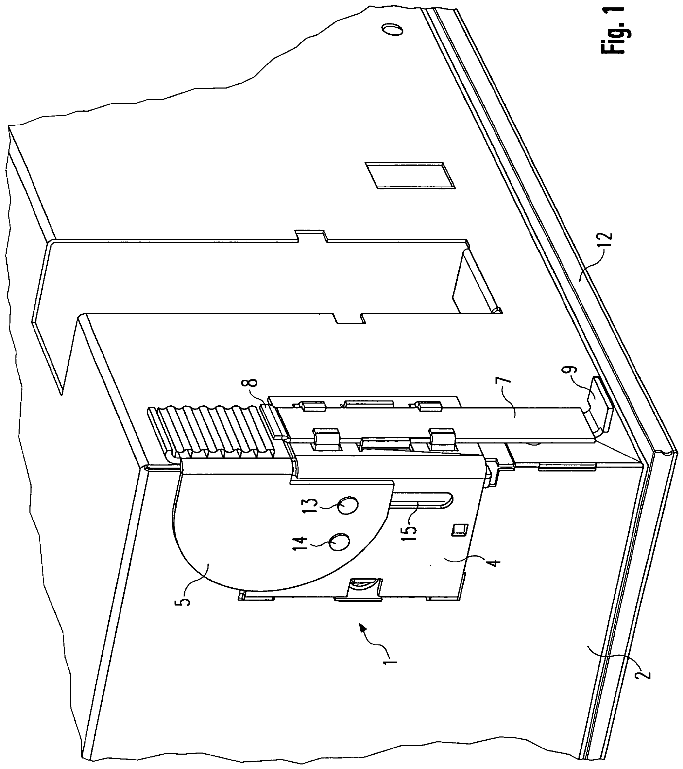

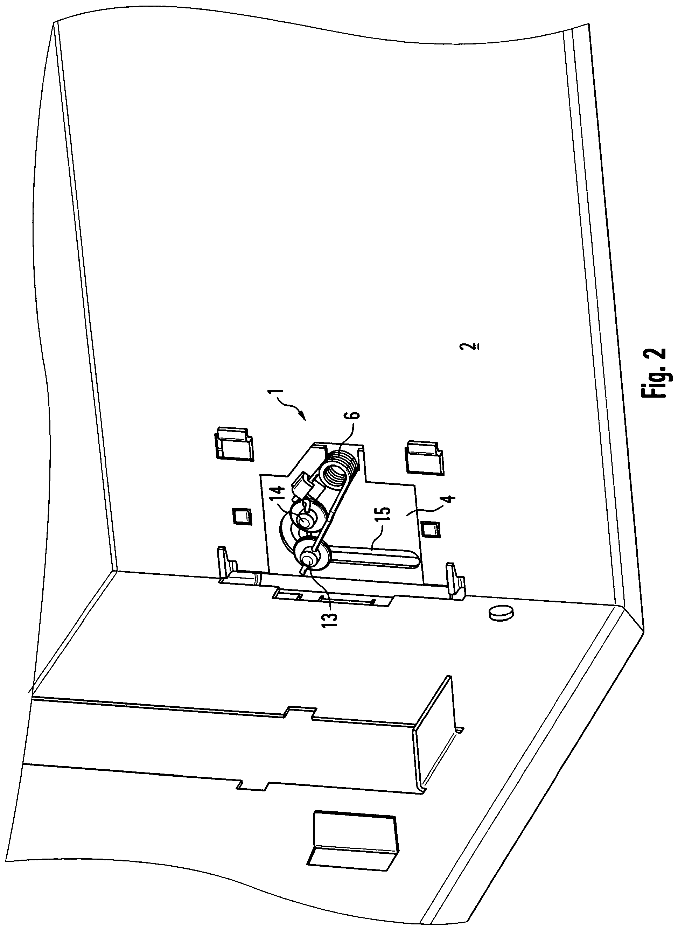

In den Figuren 1 bis 8 ist ein erstes Ausführungsbeispiel eines erfindungsgemäßen Befestigungselements dargestellt, das sich für eine Einbauleuchte in Form einer Deckeneinbauleuchte, die als Wannenleuchte ausgebildet ist, eignet. Die Figuren zeigen das Befestigungselement 1 in einem an einem wannenförmigen Gehäuse 2 einer Einbauleuchte angebrachten Zustand. Eine entsprechende Einbauleuchte kann beispielsweise zwei, drei, vier oder mehr gleichartige Befestigungselemente 1 aufweisen.

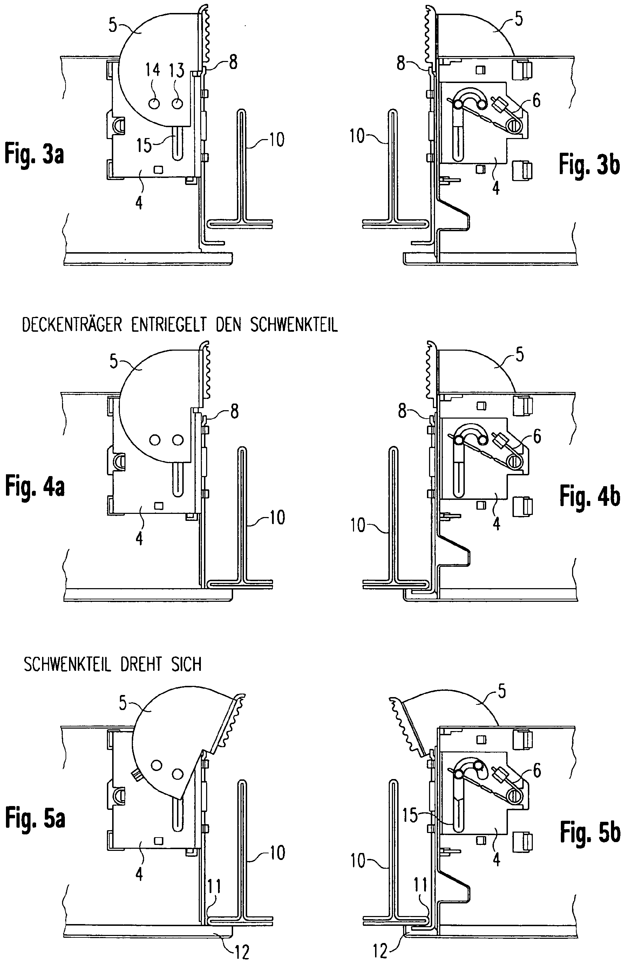

Die Einbauleuchte ist dabei zum Einbau in eine Einbauöffnung vorgesehen. In den Figuren 3 bis 8 ist die Einbauöffnung nur einseitig angedeutet, und zwar exemplarisch durch einen Deckenträger 10, dessen eine untere Kante 11, wie in den Figuren 5a und 5b exemplarisch bezeichnet, den Rand der Einbauöffnung bildet. Statt des Deckenträgers 10 kann dabei auch ein anderes Deckenbauteil vorgesehen sein. Die Einbauleuchte weist dabei einen randseitigen Flansch oder kurz Randflansch 12 auf, der dazu vorgesehen ist, von außen den Rand der Einbauöffnung abzudecken, wenn sich die Einbauleuchte in der vorgesehenen Einbauposition befindet.

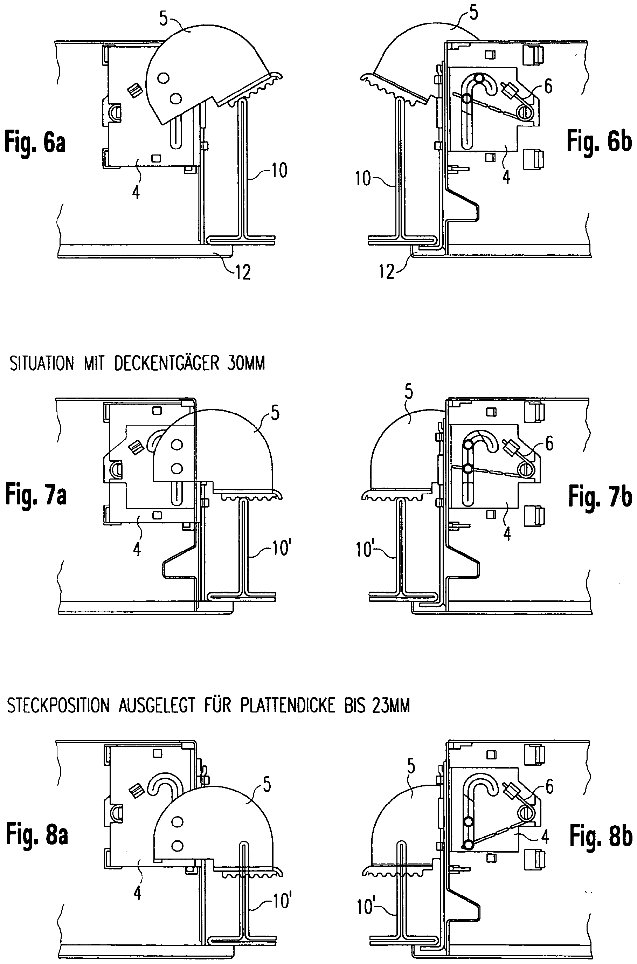

Das Befestigungselement 1 weist ein Basisteil 4 auf, das in an sich bekannter Weise am wannenförmigen Gehäuse 2 befestigt ist, beispielsweise mittels Rastelementen. Weiterhin umfasst das Befestigungselement 1 ein Verriegelungselement 5, das relativ zu dem Basisteil 4 bewegt werden kann, und zwar zwischen einer Montageposition, so wie in den Figuren 1, 2, 3a und 3b gezeigt, und einer Verriegelungsposition. Eine mögliche Verriegelungsposition ist in den Figuren 6a und 6b gezeigt.

Wenn sich das Verriegelungselement 5 in der Montageposition befindet, kann die Einbauleuchte in die Einbauöffnung eingeführt werden. Das Verriegelungselement 5 steht in dieser Position dementsprechend nicht oder nur entsprechend geringfügig nach außen über die betreffende Außenwand des Gehäuses über, so dass die Einbauleuchte von außen in die Einbauöffnung eingeführt werden kann, ohne dass das Verriegelungselement 5 gegen den Deckenträger 10 stößt.

Wenn sich das Verriegelungselement 5 in der Verriegelungsposition befindet, ist die Einbauleuchte in einer vorgesehenen Einbauposition in der Einbauöffnung fixiert.

Das Befestigungselement 1 weist weiterhin Mittel zur selbstständigen Bewegung des Verriegelungselements 5 von der Montageposition in die Verriegelungsposition auf. Beim ersten Ausführungsbeispiel umfassen diese Mittel eine Feder in Form einer am Basisteil 4 angeordneten und auf das Verriegelungselement 5 wirkenden Spiralfeder 6. Die Spiralfeder 6 ist vorgespannt, wenn sich das Verriegelungselement 5 in der Montageposition befindet und übt dabei einen Druck auf das Verriegelungselement 5 aus. In der Feder 6 ist in diesem vorgespannten Zustand soviel Energie gespeichert, wie zur Ausführung der Bewegung des Verriegelungselements 5 von der Montageposition in die Verriegelungsposition und zur Fixierung bzw. zum Halten der Einbauleuchte in der Einbauöffnung in der Decke notwendig ist. Falls die Vorspannung der Feder 6 gelöst wird, wird eine Bewegung des Verriegelungselements 5 von der Montageposition in die Verriegelungsposition ausgelöst.

Die Haltekraft, also die Kraft, mit der die Einbauleuchte in der Einbauöffnung gehalten wird, wird bei diesem ersten Ausführungsbeispiel durch die Feder 6 - bzw. falls mehrere Befestigungselemente für die Einbauleuchte vorgesehen sind, durch die entsprechenden Federn - aufgebracht.

Wie beispielsweise aus den Figuren 6a und 6b hervorgeht, ist beim ersten Ausführungsbeispiel die Verriegelung dadurch gebildet, dass das Verriegelungselement 5 durch Wirkung der Feder 6 von einer Seite gegen den Deckenträger 10 und der Randflansch 12 der Einbauleuchte von der anderen Seite gegen den Deckenträger 10 drückt. Die Verriegelung kann also durch eine Einklemmung des Deckenträgers 12 - oder allgemeiner des entsprechenden Deckenbauteils - zwischen dem Verriegelungselement 5 und dem Randflansch 12 vorgesehen sein.

Die Mittel zur selbstständigen Bewegung des Verriegelungselements 5 umfassen weiterhin zwei Führungsbolzen 13, 14, die drehbar gelagert am Verriegelungselement 5 angeordnet sind, sowie eine Kulisse 15, die durch eine Öffnung im Basisteil 4 gebildet ist und die zur Führung der beiden Führungsbolzen 13, 14 vorgesehen ist. Die Kulisse 15 ist dabei in einem oberen Bereich U-förmig gebogen und geht dann in einem unteren Bereich in einen geraden Abschnitt über, so wie beispielsweise aus Fig. 5b ersichtlich. Dadurch wird eine Beweglichkeit des Verriegelungselements 5 gegenüber dem Basisteil 4 bzw. gegenüber dem Gehäuse der Leuchte erzielt, die aus der Montageposition beginnend zunächst eine Drehbewegung um eine horizontale Achse und anschließend eine nach unten gerichtete Linearbewegung umfasst. Bei der Drehbewegung wird dabei das Verriegelungselement 5 so weit nach außen geschwenkt, dass es in der Einbauposition der Leuchte über den Deckenträger 10 greift.

Die Kulisse 15 ist bei diesem Ausführungsbeispiel so gewählt, dass sich das Verriegelungselement 5 in der Verriegelungsposition verkeilt und so einem Zurückbewegen aus der Verriegelungsposition heraus in Richtung Montageposition entgegenwirkt.

Weiterhin umfasst das Befestigungselement 1 ein Auslöseelement 7, mit dem die Mittel zur selbstständigen Bewegung des Verriegelungselements 5 aktiviert werden können. Beim ersten Ausführungsbeispiel ist dies dadurch realisiert, dass das Auslöseelement 7 am Basisteil 4 verschiebbar angeordnet ist, und zwar - wie beispielsweise aus Fig. 1 hervorgeht - in einer vertikalen Richtung, falls die Einbauleuchte so orientiert ist, wie in der vorgesehenen Einbauposition (diese Ausrichtung wird im Rahmen dieser Beschreibung bei Richtungsangaben stillschweigend angenommen). Dabei ist das Auslöseelement 7 zwischen einer Auslösebereitschaftsstellung und einer Auslösestellung verschiebbar. In der Auslösebereitschaftsstellung, die beispielsweise in den Figuren 1, 3a und 3b gezeigt ist, befindet sich das Auslöseelement 7 in einer oberen Stellung und drückt mit einem Rückhaltebereich 8 gegen das Verriegelungselement 5, so dass dieses entgegen der Kraft der Feder 6 in der Montageposition gehalten wird. In einer unteren Position, die beispielsweise in den Figuren 4a und 4b gezeigt ist, ist das Auslöseelement 7 so weit nach unten verschoben, dass der Rückhaltebereich 8 nicht mehr gegen das Verriegelungselement 5 drückt und folglich die Feder 6 das Verriegelungselement 5 in die Verriegelungsposition drückt.

Das Auslöseelement 7 weist weiterhin einen Druckbereich 9 auf, der eine nach oben gerichtete Flächennormale aufweist. Durch einen Druck von oben auf den Druckbereich 9 des in der oberen Position, also in der Auslösebereitschaftsposition befindlichen Auslöseelements 7 kann dieses nach unten in die Auslösestellung bewegt werden.

Der Druckbereich 9 ist dabei derart an dem Auslöseelement 7 angeordnet, dass erwenn die Einbauleuchte in die Einbauöffnung in die vorgesehene Einbauposition bewegt wird - auf einem letzten Bewegungsabschnitt von unten gegen den Deckenträger 10 gedrückt werden muss, so dass das Auslöseelement 7 in die Auslösestellung bewegt wird.

Beim dargestellten Ausführungsbeispiel ist das Auslöseelement 7 im Wesentlichen länglich und vertikal verschiebbar am Basisteil 4 angeordnet. Der Druckbereich 9 ist dabei von einem etwa rechtwinklig nach außen abgebogenen Bereich des Auslöseelements 7 gebildet. Der Druckbereich 9 ist dabei vertikal über einem Bereich des Randflansches 12 angeordnet. Dabei ist der Druckbereich 9 in Aufsicht innerhalb des Randflansches 12 angeordnet. Auf diese Weise ist in der vorgesehenen Einbauposition das Auslöseelement 7 nicht sichtbar, wenn die Einbauleuchte von außen aus normaler Richtung betrachtet wird.

Zum Einbau der Einbauleuchte ist vorgesehen, dass sich das Auslöseelement 7 zunächst in der Auslösebereitschaftsstellung befindet und das Verriegelungselement 5 entsprechend durch die Feder 6 in der Montageposition vorgespannt ist. Sobald dann die Einbauleuchte in die vorgesehene Einbauposition gebracht wird, wird auf dem letzten Abschnitt dieser Bewegung der Druckbereich 9 und damit das Auslöseelement 7 durch Wechselwirkung mit dem Rand der Einbauöffnung zwangsläufig, sozusagen automatisch, aus der Auslösebereitschaftsstellung in die Auslösestellung verschoben, so dass der Rückhaltebereich 8 des Auslöseelements 7 nicht mehr auf das Verriegelungselement 5 wirkt, dieses also freigibt und aufgrund der Wirkung der Feder 6 das Verrieglungselement 5 in die Verrieglungsposition gedrückt wird, und zwar geführt mithilfe der in der Kulisse 15 geführten Führungsbolzen 13, 14.

Diese Bewegungsabfolge ist in den Figuren 3 bis 6 jeweils in schematischer Querschnittdarstellung verdeutlicht. Die Figuren 3a, 4a, 5a und 6a zeigen dabei jeweils eine Ansicht von außerhalb des Leuchtengehäuses, die Figuren 3b, 4b, 5b und 6b die entsprechenden Ansichten von innerhalb. Die Figuren 3a und 3b zeigen dabei den Zustand vor dem Einbau der Leuchte. In den Figuren 4a und 4b ist der Zustand dargestellt, in dem die Leuchte soweit in die Einbauöffnung eingeführt ist, dass durch Anschlag des Druckbereichs 9 von unten gegen den Deckenträger 10 das Auslöseelement 7 in die Auslösestellung verschoben ist, also das Verriegelungselement 5 entriegelt ist. Dadurch bewirkt die Feder 6 ein Schwenken des Verriegelungselements 5 nach außen, wie in den Figuren 5a und 5b dargestellt. Schließlich wird die Bewegung des Verriegelungselements 5 durch Anschlag von oben an den Deckenträger 10 begrenzt, wie in den Figuren 6a und 6b gezeigt. In dieser Stellung ist der Deckenträger 10 zwischen dem Verriegelungselement 5 und dem Randflansch 12 festgeklemmt.

Der in den Figuren 6a und 6b gezeigte Deckenträger 10 kann beispielsweise eine Höhe von 45 mm aufweisen. Der in den Figuren 7a und 7b exemplarisch alternativ gezeigte Deckenträger 10' kann beispielsweise eine Höhe von 30 mm aufweisen. Dadurch ergibt sich eine weitere Verriegelungsposition, die sich von der ersten, in den Figuren 6a und 6b gezeigten Verriegelungsposition dementsprechend unterscheidet.

Die in den Figuren 8a und 8b gezeigte Position entspricht einer Steckposition, die beispielsweise für einen Deckenträger bis zu 23 mm Höhe ausgelegt sein kann.

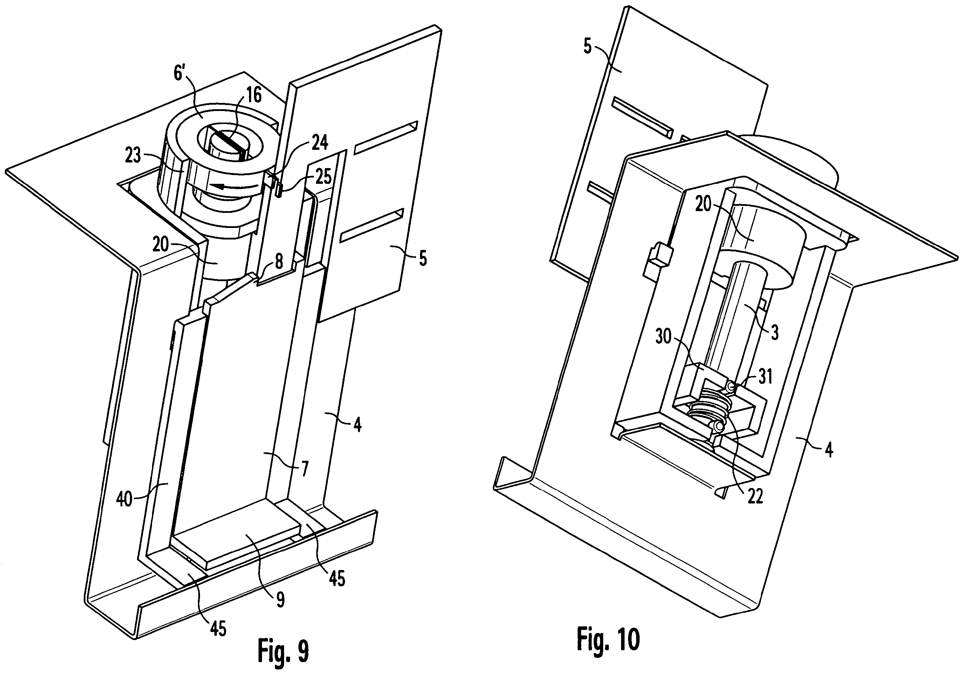

In den Figuren 9 bis 21 ist ein zweites Ausführungsbeispiel eines erfindungsgemäßen Befestigungselements dargestellt, bei dem gleiche Bezugszeichen jeweils entsprechende Teile bezeichnen. Im Folgenden wird im Wesentlichen lediglich auf die prinzipiellen Unterschiede zum ersten Ausführungsbeispiel eingegangen.

Das zweite Ausführungsbeispiel eignet sich allgemein für Einbauleuchten, zum Beispiel für Wannenleuchten. Das Befestigungselement eignet sich dafür, auf einer Außenseite einer (hier nicht dargestellten) Wanne einer Einbauleuchte montiert zu werden.

Ein Unterschied zum ersten Ausführungsbeispiel liegt darin, dass für die Bewegung des Verriegelungselements 5 beim zweiten Ausführungsbeispiel zunächst eine Drehung um eine vertikale (statt um eine horizontale) Achse vorgesehen ist, bevor eine Linearbewegung nach unten erfolgt. Bei der Drehung wird wiederum das Verriegelungselement 5 nach außen geschwenkt, so dass es über ein Deckenbauteil, beispielsweise einen Deckenträger 10 greift, wenn sich die Einbauleuchte in einer vorgesehenen Einbauposition befindet. In der Montageposition, die beispielsweise in den Figuren 9 bis 12 gezeigt ist, ist das Verriegelungselement 5 eingeschwenkt, so dass die Einbauleuchte von außen in die Einbauöffnung eingeführt werden kann.

Beim zweiten Ausführungsbeispiel weist das Verriegelungselement 5 einen Führungsbereich 20 mit einem Innengewinde auf. Weiterhin ist eine Gewindewelle 3 vorgesehen, die um eine vertikale Achse drehbar bezüglich dem Basisteil 4 angeordnet ist. Der Führungsbereich 20 des Verriegelungselements 5 greift dabei kämmend von außen in die Gewindewelle 3, so dass bei einer Drehung der Gewindewelle 3 relativ zu dem Verriegelungselement 5 der Führungsbereich 20 und damit das gesamte Verriegelungselement 5 bezüglich dem Basisteil 4 in der Höhe verstellt wird.

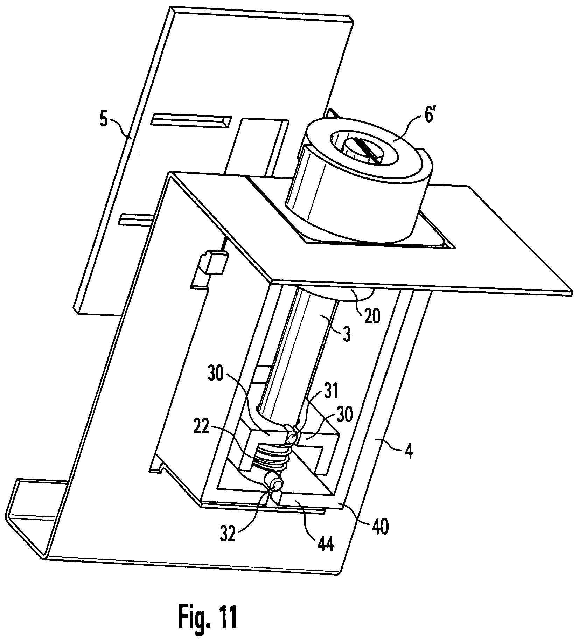

Die Feder 6, die bei diesem zweiten Ausführungsbeispiel durch eine Spiralblattfeder 6' gebildet ist, ist drehbar am Basisteil 4 angeordnet und wirkt im gespannten bzw. vorgespannten Zustand auf die Gewindewelle 3 im Sinne einer Drehung, durch die das Verriegelungselement 5 nach unten bewegt wird. In der Montageposition ist die Feder 6' dementsprechend vorgespannt. Die Vorspannung der Feder 6' in der Montageposition wird dabei durch eine Sperre 30 aufrechterhalten, die fest mit dem Auslöseelement 7 verbunden ist und die auf einen Vorsprung 31 der Gewindewelle 3 wirkt, wie beispielsweise aus Fig. 11 hervorgeht. Die Sperre 30 ist dabei derart am Auslöseelement 7 angeordnet, dass der Vorsprung 31 freigegeben wird, wenn das Auslöseelement 7 aus der Auslösebereitschaftsstellung in die Auslösestellung bewegt wird.

Um die Sperre 30 gegen ein ungewolltes, selbstständiges abwärts gerichtetes Abrutschen zu sichern, ist eine weitere Feder 22 vorgesehen, wie beispielsweise aus Fig. 10 ersichtlich. Die weitere Feder 22 ist dabei derart an der Gewindewelle 3 befestigt, dass sie von unten gegen die Sperre 30 drückt. Eine Bewegung des Auslöseelements 7 von der Auslösebereitschaftsstellung in die Auslösestellung ist dabei gegen den aufwärts gerichteten Druck der weiteren Feder 22 möglich.

Zur Kraftübertragung von der Feder 6' auf die Gewindewelle 3 ist am oberen Rand der Gewindewelle 3 eine Nut 16 vorgesehen, in die die Feder 6' mit ihrem inneren Endbereich eingreift. An ihrem äußeren Endbereich weist die Feder 6' zwei Greifvorsprünge 24, 25 auf, die in einen nach oben vorstehenden Führungsansatz 27 des Verriegelungselements 5 eingreifen, so dass bei einer Drehung der Feder 6' das Verriegelungselement 5 entsprechend mitgedreht wird.

Wird das Verriegelungselement 5 beginnend aus der Montageposition durch eine Drehung der Feder 6' gedreht, so wie durch den Pfeil in Fig. 9 angedeutet, schwenkt das Verriegelungselement 5 nach außen und übergreift dabei den (hier nicht gezeigten) Deckenträger 10, wenn sich die entsprechende Einbauleuchte in der vorgesehenen Einbauposition befindet.

Diese zuletzt genannte Drehbewegung wird durch einen Anschlag 23 so begrenzt, dass das Verriegelungselement 5 relativ zu dem Basisteil 4 in ausgeschwenktem Zustand verbleibt. Bei weitergehender Drehung der Feder 6' wird die Gewindewelle 3 gedreht und somit durch das Zusammenwirken zwischen Gewindewelle 3 und Führungselement 20 das Verriegelungselement 5 nach unten bewegt, und zwar bis es von oben gegen das Deckenbauteil anschlägt und damit die Verriegelungsposition erreicht ist. Der Anschlag 23 ist so gestaltet, dass bei dieser Bewegung das Verriegelungselement 5 durch den Anschlag 23 in ausgeschwenktem Zustand gehalten wird.

Die Feder 6' ist dabei derart ausgelegt, dass sie in der Verriegelungsposition noch eine Restspannung aufweist. Ein Zurückbewegen des Verriegelungselements 5 Sinne eines Einschwenkens wird dadurch zuverlässig verhindert. Bei diesem zweiten Ausführungsbeispiel ist die Haltekraft, mit der die Einbauleuchte in der Einbauöffnung fixiert ist, durch die Restspannung der Feder 6' und die Steigung des Gewindes der Gewindewelle 3 gegeben.

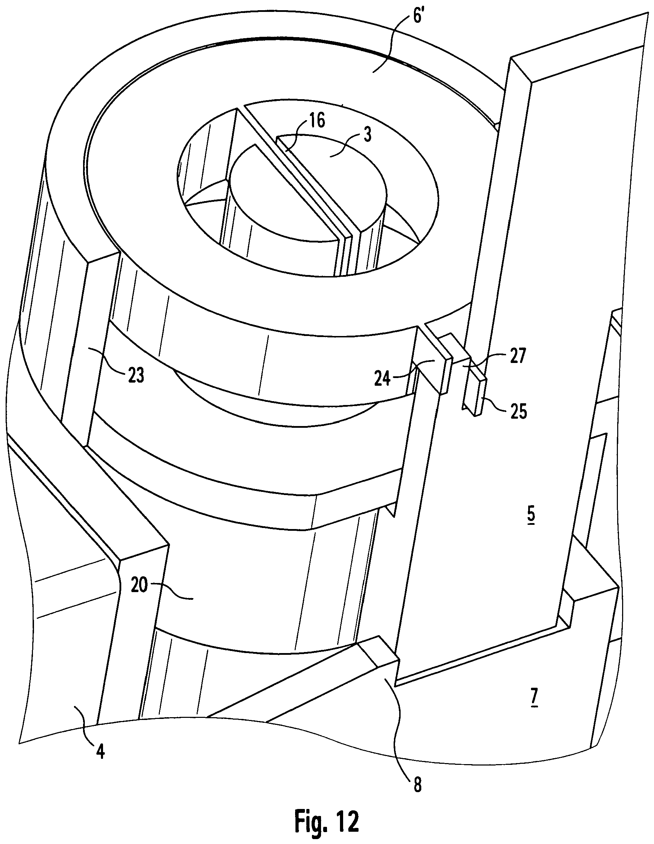

Das Auslöseelement 7 ist vertikal verschiebbar am Basisteil 4 angeordnet und der Rückhaltebereich 8 des Auslöseelements 7, der beispielsweise in den Figuren 9 und 12 bezeichnet ist, drückt in der Montageposition seitlich gegen das Verriegelungselement 5. Bei einer Bewegung des Auslöseelements 7 von der Auslösebereitschaftsstellung in die Auslösestellung wird das Rückhalteelement 8 so weit nach unten bewegt, dass es nicht mehr auf das Verriegelungselement 5 wirkt. Auf diese Weise wird die Bewegung des Verriegelungselements 5 aus der Montageposition in die Verriegelungsposition ausgelöst.

Ein weiterer Unterschied zum ersten Ausführungsbeispiel besteht darin, dass eine doppelte Sperrmöglichkeit der Mittel zur selbstständigen Bewegung des Verriegelungselements 5 von der Montageposition in die Verriegelungsposition vorgesehen ist. Dies ist vorteilhaft, weil beispielsweise während einer Auslieferung der Einbauleuchte eine doppelte Sperre und damit erhöhte Sicherheit ermöglicht ist, wobei dann am Einbauort vor dem Einbau der Leuchte die erste Sperre gelöst werden kann, so dass nur noch eine einfache Sperre gegeben ist. Diese einfache Sperre kann durch den oben beschriebenen Mechanismus gegeben sein kann, so dass sie dementsprechend in dem Moment gelöst wird, in dem die Einbauleuchte in die vorgesehene Einbauposition bewegt wird.

Für die doppelte Sperrmöglichkeit weist das Befestigungselement 1 weiterhin ein beispielsweise in Fig. 9 bezeichnetes Sperrteil 40 auf, das - ebenso wie das Auslöseelement 7 - relativ zu dem Basisteil 4 verschiebbar, vorzugsweise vertikal verschiebbar angeordnet ist, und zwar zwischen einer Sperrstellung und einer Freigabestellung. Beim dargestellten Ausführungsbeispiel ist das Sperrteil 40 dabei verschiebbar am Basisteil 4 angeordnet und das Auslöseelement 7 wiederum verschiebbar am Sperrteil 40.

Das Sperrteil 40 weist eine weitere Sperre 44 auf, die die Gewindewelle 3 über einen weiteren Vorsprung 32 gegen eine Drehung sperrt, wenn sich das Sperrteil 40 in der Sperrstellung befindet. In der Freigabestellung, die beispielsweise in Fig. 11 gezeigt ist, ist die weitere Sperre 44 so positioniert, dass sie nicht mehr auf die Gewindewelle 3 wirkt.

Wie beispielsweise aus Fig. 9 ersichtlich, weist das Sperrteil 40 weiterhin einen weiteren Druckbereich 45 auf, der analog und - beispielsweise beidseitig - unmittelbar benachbart zu dem Druckbereich 9 des Auslöseelements 7 gestaltet ist. Der weitere Druckbereich 45 ist dementsprechend wiederum durch einen nach außen gebogenen Bereich des Sperrteils 40 gebildet und weist eine nach oben gerichtete Flächennormale auf. Der weitere Druckbereich 45 ist dabei derart am Sperrteil 40 angeordnet, dass ein bündiger Übergang zu dem Druckbereich 9 des Auslöseelements 7 gebildet ist, falls sich das Sperrteil 40 in der Sperrstellung befindet. Beispielsweise kann vorgesehen sein, dass in diesem Zustand der Druckbereich 9 des Auslöseelements 7 und der weitere Druckbereich 45 des Sperrteils 40 eine ebene nach oben gerichtete Fläche bilden.

Falls sich das Sperrteil 40 in der Freigabestellung befindet, ist der weitere Druckbereich 45 so weit nach unten verschoben, dass das Auslöseelement 7 in die Auslösestellung verschoben werden kann, ohne dass der Druckbereich 9 unter das Niveau des weiteren Druckbereichs 45 bewegt werden muss.

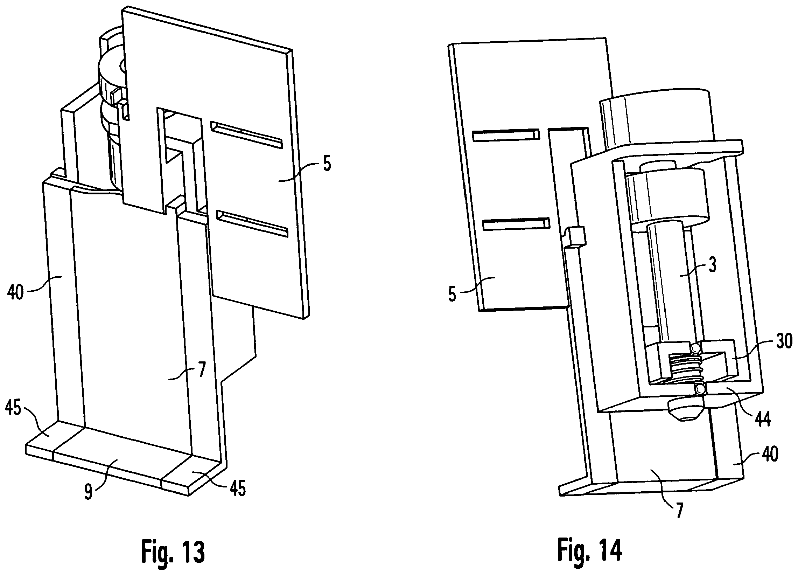

Der vorgesehene Bewegungsablauf ist in den Figuren 13 bis 21 dargestellt. Die Figuren 13 und 14 zeigen dabei in zwei unterschiedlichen Ansichten den Zustand mit doppelt gesperrten Mitteln zur selbstständigen Bewegung des Verriegelungselements 5 von der Montageposition in die Verriegelungsposition.

Dabei befindet sich das Sperrteil 40 in der Sperrstellung und das Auslöseelement 7 in der Auslösebereitschaftsstellung. Der Druckbereich 9 des Auslöseelements 7 und der Druckbereich 45 des Sperrteils 40 sind dabei bündig, so wie in den Figuren 13 und 14 dargestellt.

Wie in Fig. 14 gezeigt, ist in diesem Zustand die Gewindewelle 3 doppelt gegen eine Drehung gesichert, und zwar einerseits durch die Sperre 30 des Auslöseelements 7 und andererseits durch die weitere Sperre 44 des Sperrteils 40.

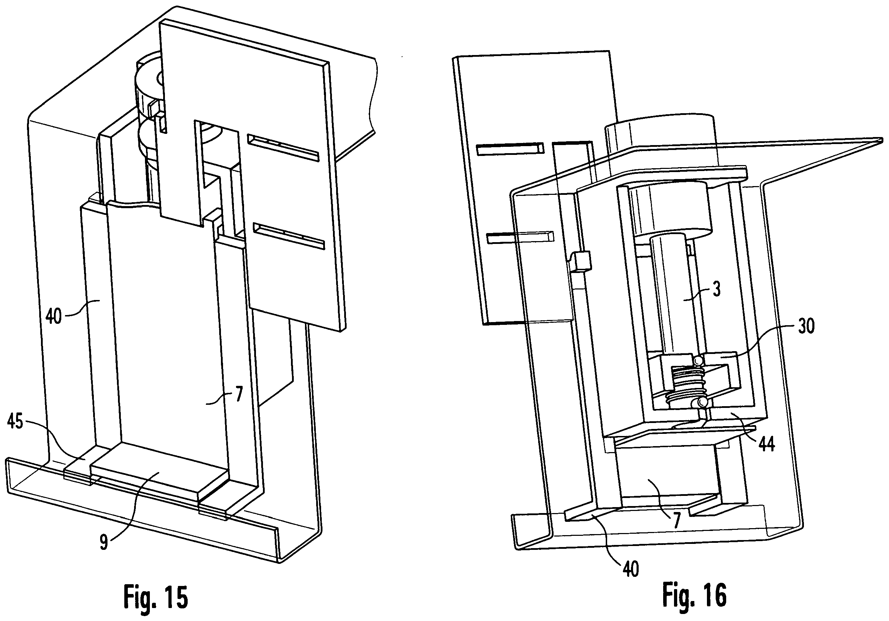

In den Figuren 15 und 16 ist der Zustand dargestellt, in dem eine Sperre aufgehoben ist, und zwar diejenige des Sperrteils 40. Das Sperrteil 40 befindet sich dabei in Freigabestellung. Wie aus Fig. 15 ersichtlich, steht dabei der Druckbereich 9 des Auslöseelements 7 gegenüber dem weiteren Druckbereich 45 des Sperrteils 40 nach oben vor.

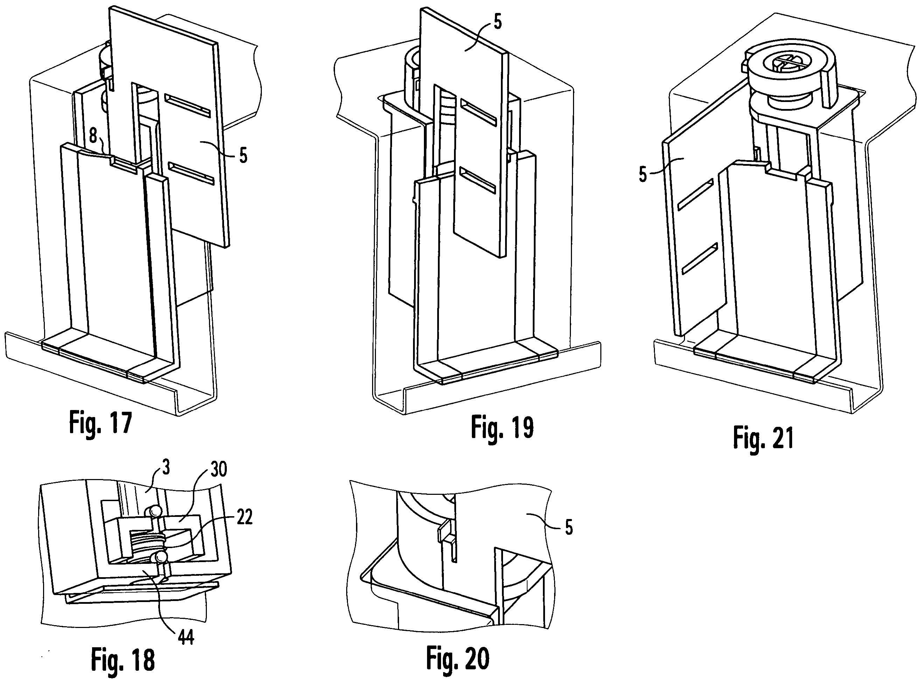

In den Figuren 17 und 18 ist der Zustand gezeigt, in dem das Auslöseelement 7 in die Auslösestellung gebracht ist. Wie aus Fig. 17 ersichtlich, wird dabei das Verriegelungselement 5 nicht mehr von dem Rückhaltebereich 8 des Auslöseelements 7 in Montageposition gehalten. Wie aus Fig. 18 ersichtlich, ist auch die Gewindewelle 3 nicht mehr gesperrt, weil die Sperre 30 des Auslöseelements 7 dementsprechend nach unten verschoben ist. In dieser Stellung kann sich also die Feder 6' entspannen und die Bewegung des Verriegelungselements 5 wird eingeleitet.

In den Figuren 19 und 20 ist der Zustand dargestellt, in dem das Verriegelungselement 5 ausgeschwenkt ist und in Fig. 21 schließlich der Zustand, in dem das Verriegelungselement 5 so weit nach unten gefahren ist, dass es sich in der Montageposition befindet.

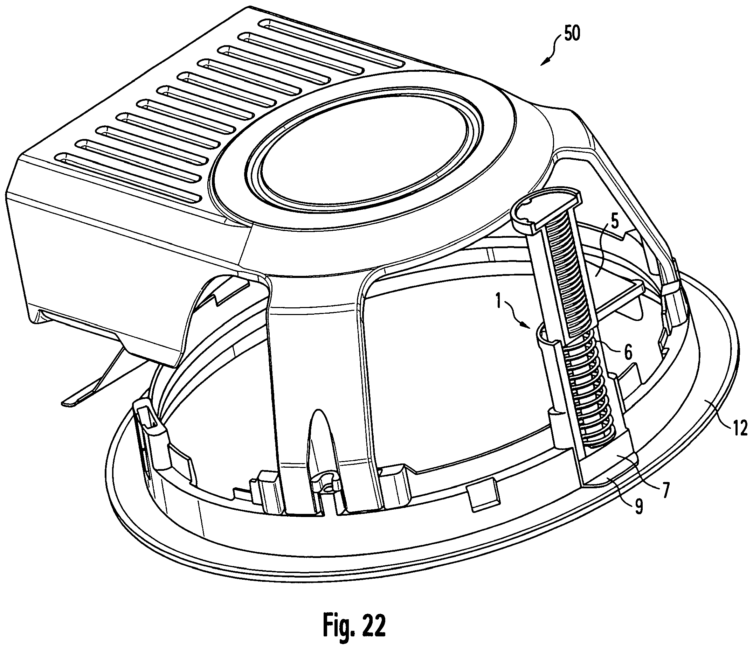

Anhand der Figuren 22 bis 28 wird nunmehr ein drittes Ausführungsbeispiel eines erfindungsgemäßen Befestigungselements dargestellt, wobei wiederum gleiche Bezugszeichen jeweils entsprechende Teile bezeichnen.

In Fig. 22 ist ein Gehäusebauteil 50 einer Einbauleuchte mit einem kreisförmigen Randflansch 12 gezeigt, an dem das Befestigungselement 1 angebracht ist. Bei der Einbauleuchte kann es sich beispielsweise um ein Downlight handeln.

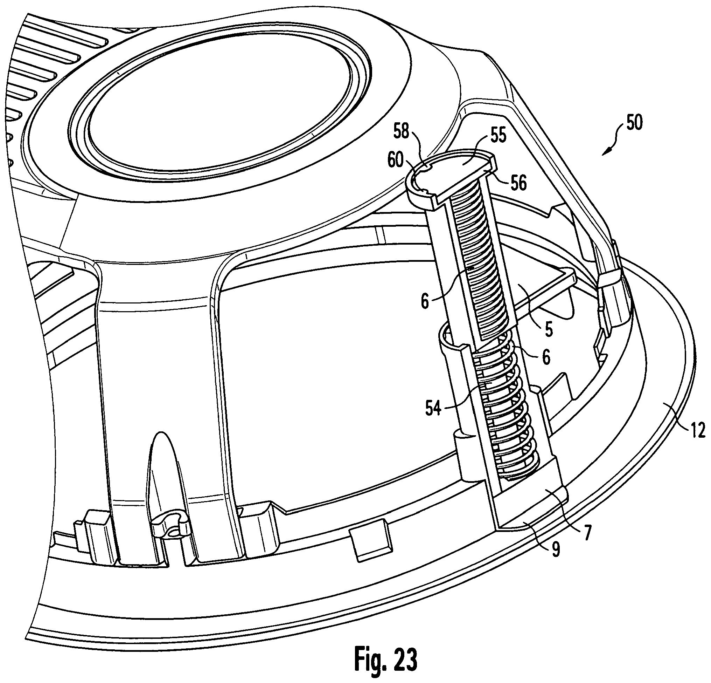

In Fig. 23 ist das Befestigungselement näher gezeigt. Dabei ist das Auslöseelement 7 zu erkennen, das wiederum vertikal verschiebbar am Gehäusebauteil 50 angeordnet ist. Dadurch, dass das Auslöseelement 7 vertikal geführt ist, entstehen bei einer Bewegung keine Kräfte, die sich negativ auf die Befestigung des Befestigungselements auswirken könnten.

Weiterhin erkennt man den Druckbereich 9 des Auslöseelements 7, der bezüglich dem Randflansch 12 nach oben "vorsteht" und mit Bezug auf das Gehäusebauteil 50 nach unten geschoben wird, wenn die Einbauleuchte in eine Einbauöffnung in die vorgesehen Einbauposition gebracht wird, und zwar wiederum dadurch, dass der Druckbereich 9 von unten gegen einen Randbereich der Einbauöffnung gedrückt wird. In der Auslösestellung ist dabei der Druckbereich 9 im ringförmigen Randflansch 12 des Gehäusebauteils 50 "versenkt". Vorteilhaft kann weiterhin vorgesehen sein, dass das Auslöseelement 7 durch ein Federteil, beispielsweise eine Federzunge, leicht in die Auslösebereitschaftsstellung gedrückt wird. Auf diese Weise muss beim Spannen der Einheit nur das Verriegelungselement 5 bewegt werden.

Die Bewegung des Verriegelungselements 5 von der Montageposition in die Verriegelungsposition umfasst zunächst eine Drehbewegung um eine vertikale Achse, bei der das Verriegelungselement 5 so weit nach außen geschwenkt wird, dass es über ein Deckenteil, beispielsweise über einen (nicht gezeigten) Deckenträger greift, wenn sich die Einbauleuchte in einer vorgesehenen Einbauposition befindet. Anschließend ist wiederum eine vertikale Linearbewegung nach unten vorgesehen, in der das Verriegelungselement 5 so weit nach unten fährt, bis es gegen das Deckenteil drückt.

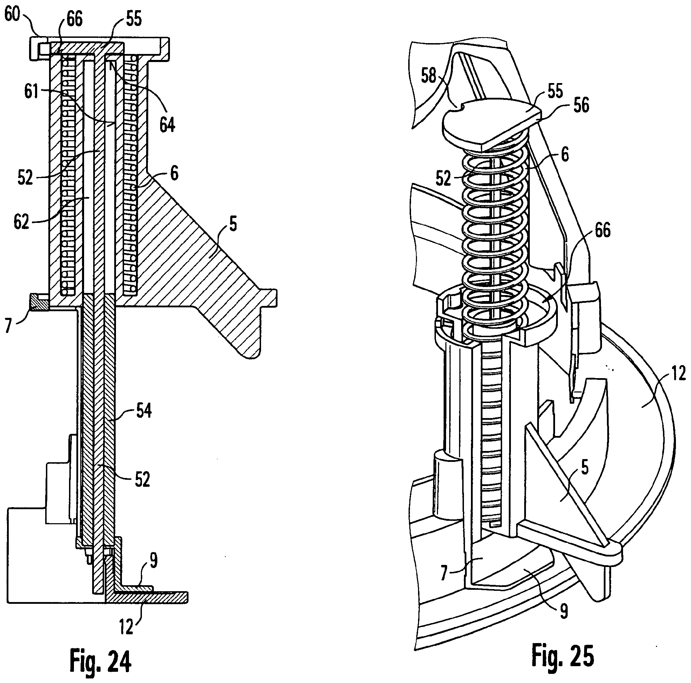

Bei dem gezeigten Ausführungsbeispiel ist als Basisteil ein fest mit dem Gehäusebauteil 50 verbundener Führungsstift 52 vorgesehen, der beispielsweise in der schematischen Schnittdarstellung der Fig. 24 zu erkennen ist. Der Führungsstift 52 ist dabei in einem unteren Bereich von einer Kolbenhülse 54 umgeben. Das Verriegelungselement 5 umgibt dabei den Führungsstift 52 und die Kolbenhülse 54, so wie am besten aus Fig. 24 zu entnehmen, so dass das Verriegelungselement 5 an der Kolbenhülse 54 und dem Führungsstift 52 geführt in der Vertikalen verschoben werden kann.

Außerdem kann das Verriegelungselement 5 um den Führungsstift 52 gedreht werden, so dass durch diese Drehung ein Ein- bzw. Ausschwenken des Verriegelungselements 5 realisiert ist, wobei die Drehachse dieser Bewegung mit der Längsachse des Führungsstifts 52 zusammenfällt.

Wie aus Fig. 24 zu entnehmen, ist zwischen einer inneren, zylinderförmigen Begrenzungsfläche 61 des Verriegelungselements 5 und dem entsprechenden Abschnitt des Führungsstiftes 52 ein Hohlraum 62 gebildet, der am oberen Ende durch eine obere Hohlraumbegrenzungswand 64 des Verriegelungselements 5 und unten durch die Kolbenhülse 54 begrenzt ist. Die entsprechenden Fugen zwischen dem Verriegelungselement 5, dem Führungsstift 52 und der Kolbenhülse 54 sind dabei derart ausgebildet, dass durch den Hohlraum 62 ein Kompressionsraum gebildet ist, durch den eine gedämpfte Vertikalbewegung des Verriegelungselements 5 gegenüber dem Führungsstift 52 möglich ist.

Bei einer Bewegung des Verriegelungselements 5 relativ zu dem Führungsstift 52 aus einer oberen Stellung nach unten wird die Luft in dem Hohlraum 62 zusammengepresst, wodurch eine Dämpfung für diese Bewegung gebildet ist. Bei einer entgegen gesetzten Bewegung, also einer entsprechenden Bewegung des Verriegelungselements 5 nach oben wird Luft in den Hohlraum gesaugt, wodurch wiederum eine Dämpfung gebildet ist.

Auf diese Weise ist ein Dämpfungsmittel zur Dämpfung der Bewegung des Verriegelungselements 5 von der Montageposition in die Verriegelungsposition realisiert.

Der Führungsstift 52 ist der zentrale und tragende Teil des Befestigungselements. Er ist fest mit dem Gehäusebauteil 50 verbunden, beispielsweise im Bereich des Randflansches 12. Der Randflansch 12 mit benachbarten Teilen des Gehäusebauteils 50 kann als Aluminium-Druckgussteil vorgesehen sein und der Führungsstift 52 kann darin eingepresst sein. Die Kolbenhülse 54 kann dabei angeformt oder angeklebt sein.

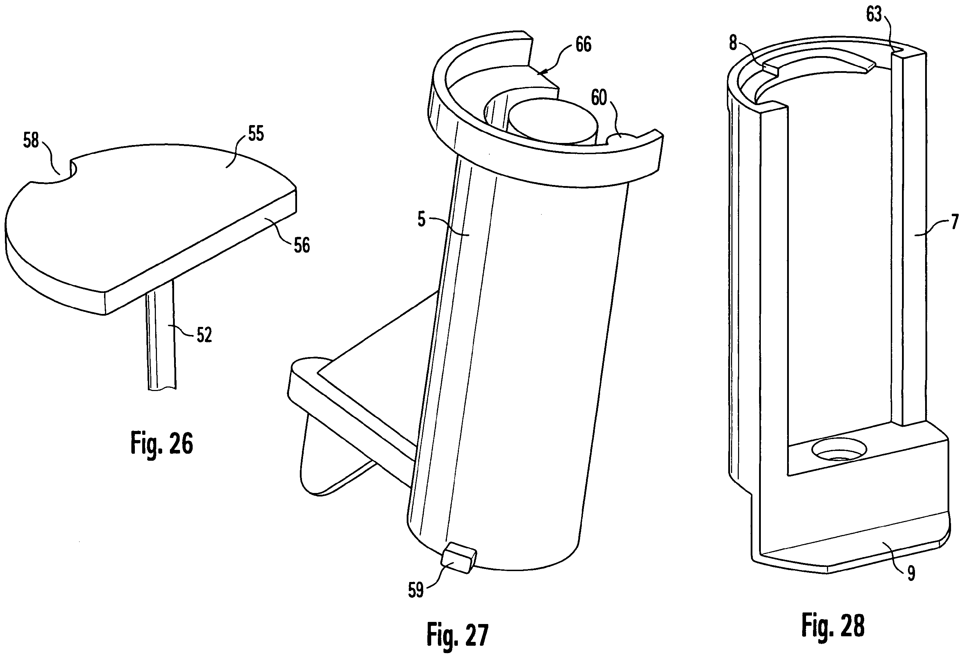

In der Montageposition hält der Führungsstift 52 in Wechselwirkung mit dem Auslöseelement 7 das Verriegelungselement 5 entgegen der Kraft der Feder 6 nach oben. Wie insbesondere aus Fig. 26 zu entnehmen, in der der obere Bereich des Führungsstiftes 52 separat dargestellt ist, weist der Führungsstift 52 an seinem oberen Endbereich einen plattenförmigen Bereich, oder kurz eine Platte 55 auf, die im Wesentlichen im Horizontalschnitt kreisförmig ist, jedoch an einer Seite eine durch eine Sekante gebildete Abflachung 56 aufweist und in einem der Abflachung 56 gegenüberliegenden Bereich eine etwa halbkreisförmige Ausnehmung, im Folgenden "Mauseloch" 58 genannt. Die Abflachung 56 ist mit Bezug auf das Gehäusebauteil 50 außen angeordnet, und zwar so, dass beim Einbau der Leuchte die Platte 55 durch die Einbauöffnung eingeführt werden kann.

Das Verriegelungselement 5 weist im oberen Bereich eine Anlagefläche 66 auf, die in der Montageposition, wie beispielsweise Fig. 24 zu entnehmen, von unten gegen die Platte 55 des Führungsstifts 52 drückt, so dass in diesem Zustand eine weitere Aufwärtsbewegung des Verriegelungselements 5 bezüglich dem Führungsstift 52 verhindert ist.

In Fig. 27 ist das Verriegelungselement 5 separat gezeigt. Dabei erkennt man im oberen Bereich einen etwa halbkreisförmigen Vorsprung 60, der so geformt ist, dass er vertikal durch das Mauseloch 58 der Platte 55 bewegt werden kann. In der Montagestellung, die beispielsweise in Fig. 23 gezeigt ist, befindet sich der Vorsprung 60 oberhalb der Platte 55 des Führungsstiftes 52. Bei einer Drehung des Verriegelungselements 5 um die vertikale Achse, also beim Ausschwenken, kann der Vorsprung 60 so weit über die Oberseite der Platte 55 bewegt werden, bis er sich genau über dem Mauseloch 58 befindet. In dieser Stellung kann dann das Verriegelungselement 5 nach unten bewegt werden. Diese Vertikalbewegung ist in der Montageposition nicht möglich, weil der Vorsprung 60 und somit das Verriegelungselement 5 durch die Platte 55 an einer Abwärtsbewegung gehindert ist.

Die Abwärtsbewegung des Verriegelungselements 5 wird wiederum durch die Spannung der Feder 6 ausgelöst, die im Montagezustand das Verriegelungselement 5 nach unten drückt.

In Fig. 28 ist das Auslöseelement 7 separat gezeigt. Man erkennt im oberen Bereich den Rückhaltebereich 8 des Auslöseelements 7, der in der Montageposition das Verriegelungselement 5 entgegen der Kraft der Feder 6 in eingeschwenkter Stellung hält. Der Rückhaltebereich 8 wirkt dabei auf einen - in Fig. 27 bezeichneten - Zapfen 59, der entsprechend im unteren Bereich des Verriegelungselements 5 an diesem vorstehend angeordnet ist.

Weiterhin erkennt man in Fig. 28 im oberen Endbereich des Auslöseelements 7 einen Anschlag 63, der so angeordnet ist, dass der Zapfen 59 beim Ausschwenken gegen diesen Anschlag schlägt, sobald sich das Verriegelungselement 5 in ausgeschwenkter Stellung befindet, und zwar so, dass sich der Vorsprung 60 genau über dem Mauseloch 58 befindet.

Um das Verriegelungselement 5 in die Montageposition mit vorgespannter Feder 6 zu bringen, wird das Verriegelungselement 5 zunächst bezüglich dem Führungsstift 52 so von unten nach oben bewegt, dass der Vorsprung 60 des Verriegelungselements 5 von unten durch das Mauseloch 58 hindurch bewegt wird. Anschließend wird das Verriegelungselement 5 um 90° in eine eingeschwenkte Stellung gedreht, und zwar entgegen der Kraft der Feder 6. Die Feder 6 ist hierzu entsprechend drehfest mit dem Verriegelungselement 5 verbunden. Diese Spannung der Feder 6 ist dabei so groß, dass durch Lösung dieser Spannung ein Ausschwenken des Verriegelungselements 5 möglich ist. Beim Einschwenken bewegt sich der Zapfen 60 über die oberseitige Oberfläche der Platte 55. Eine weitere Bewegung des Verriegelungselements 5 nach oben ist dadurch verhindert, dass die Anlagefläche 66 des Verriegelungselements 5 von unten gegen die Platte 55 des Führungsstifts 52 drückt.

Zur Auslösung der Bewegung wird der Druckbereich 9 des Auslöseelements 7 nach unten bewegt, so dass das Auslöseelement 7 in die Auslösestellung gebracht wird. Dadurch gibt der Rückhaltebereich 8 des Auslöseelements 7 den Zapfen 59 des Verriegelungselements frei und die Feder 6 bewirkt ein Ausschenken des Verriegelungselements um 90° in eine ausgeschwenkte Stellung, so wie beispielsweise in Fig. 24 dargestellt. Diese Drehbewegung ist dadurch begrenzt, dass der Zapfen 59 gegen den Anschlag 63 stößt. In diesem Zustand befindet sich der Vorsprung 60 exakt über dem Mauseloch 58, so dass aufgrund der Wirkung der Feder 6 das Verriegelungselement 5 geführt durch den Führungsstift 52 und gedämpft durch den Kompressionsraum 62 nach unten bewegt wird, bis es sich in der Montageposition befindet.

Bei diesem dritten Ausführungsbeispiel ist die Haltekraft, mit der die Einbauleuchte in der Einbauöffnung fixiert ist, durch die Feder 6, und zwar hier ausschließlich durch die Feder 6, gegeben.

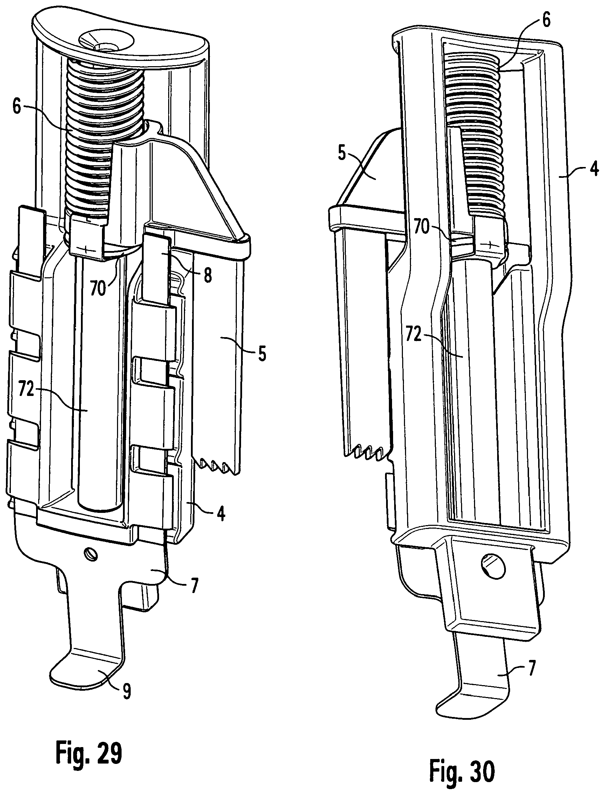

In den Figuren 29 und 30 ist in zwei perspektivischen Ansichten ein viertes Ausführungsbeispiel eines erfindungsgemäßen Befestigungselements dargestellt.

Man erkennt das Basisteil 4, das Auslöseelement 7 mit dem Druckbereich 9 und dem Rückhaltebereich 8, der in der Montageposition, die in den beiden Figuren dargestellt ist, das Verriegelungselement 5 entgegen der Kraft der Feder 6 in eingeschwenktem Zustand hält.

Ein Unterschied zu den oben genannten Ausführungsbeispielen besteht darin, dass als Dämpfungselement ein O-Ring 70 vorgesehen ist. Das Basisteil 4 weist eine Führungsstange 72 auf, an der bei der Abwärtsbewegung des Vernegelungselements der O-Ring 70 reibend nach unten gleitet.

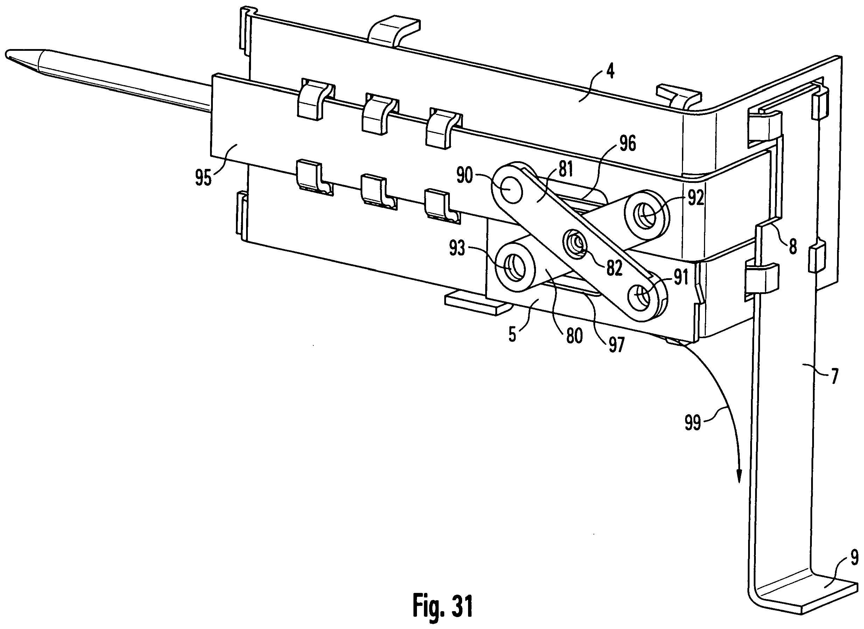

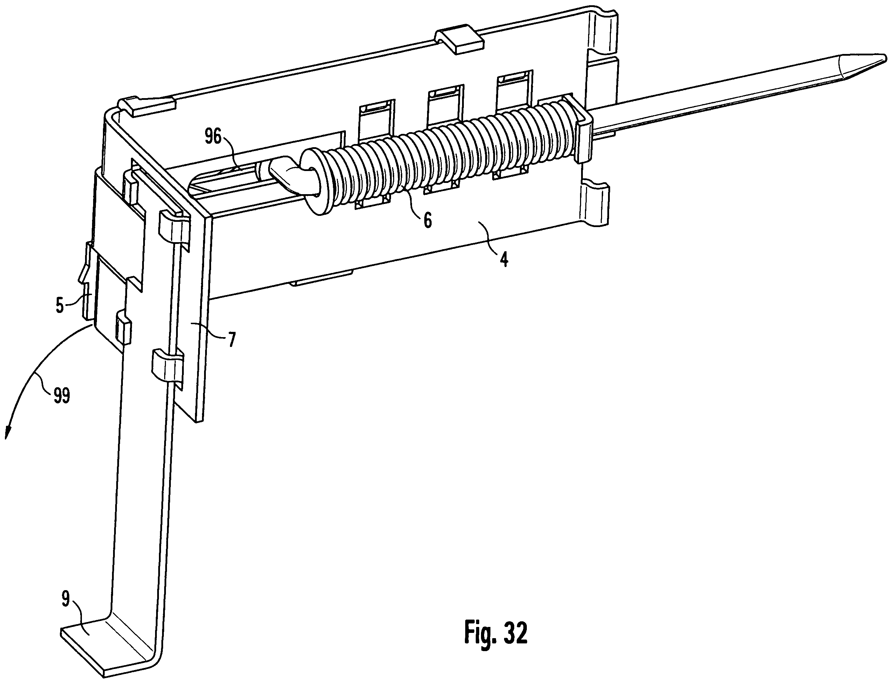

Schließlich ist in den Figuren 31 und 32 in zwei perspektivischen Ansichten ein fünftes Ausführungsbeispiel dargestellt.

Bei diesem Ausführungsbeispiel wirkt das Auslöseelement 7 nicht direkt auf das Verriegelungselement 5, sondern indirekt über ein Schiebeelement 95. Das Schiebeelement 95 ist dabei der Länge nach verschiebbar am Basisteil 4 angeordnet, und zwar in einer Richtung, die senkrecht auf die Bewegungsrichtung des Auslöseelements 7 steht.

Das Verriegelungselement 5 ist dabei über zwei Hebel 80, 81 mit dem Schiebeelement 95 verbunden, wobei die beiden Hebel 80, 81 drehbeweglich über ein erstes Gelenk 82 miteinander verbunden sind. Der erste Hebel 80 ist dabei über ein zweites Gelenk 92 drehbeweglich mit dem Schiebeelement 95 verbunden, der zweite Hebel 81 ist drehbeweglich über ein drittes Gelenk 91 mit dem Verriegelungselement 5 verbunden.

Andererseits ist der erste Hebel 80 über einen ersten Führungsbolzen 90 mit dem Schiebeelement 95 verbunden, für den im Schiebeelement 95 eine erste Kulisse 96 vorgesehen ist. Ein entsprechender, zweiter Führungsbolzen 93 ist zur weiteren Verbindung zwischen dem zweiten Hebel 81 und dem Verriegelungselement 5 vorgesehen, der in einer zweiten Kulisse 97 geführt ist, die im Verriegelungselement 5 vorgesehen ist.

Durch diese Mechanik ergibt sich bei Auslösung der Bewegung eine nach unten gerichtete Drehbewegung des Verriegelungselements 5, wie durch den Pfeil 99 angedeutet.

Die Bewegung des Auslöseelements 5 von der Auslösebereitschaftsstellung in die Auslösestellung kann, wie in den Ausführungsbeispielen dargestellt, beispielsweise mechanisch erfolgen. Alternativ kann vorgesehen sein, dass das Auslöseelement elektrisch die Mittel zur Bewegung des Verriegelungselements aktiviert, beispielsweise mittels einem Schalter, mit dem eine motorisch betriebene Bewegung des Verriegelungselements ausgelöst wird.

Die Haltekraft, mit der die Einbauleuchte in der Einbauöffnung fixiert ist, ist bei diesem Ausführungsbeispiel durch die veränderten Hebelwirkungen infolge der Stellungsänderung der Hebel 80, 81 gegeben.

### Bezugszeichenliste

- 1: Befestigungselement
- 2: Wannenförmiges Gehäuse
- 3: Gewindewelle
- 4: Basisteil
- 5: Verriegelungselement
- 6: Feder, beispielsweise Spiralfeder
- 6': Spiralblattfeder
- 7: Auslöseelement
- 8: Rückhaltebereich des Auslöseelements
- 9: Druckbereich des Auslöseelements
- 10: Deckenträger
- 11: Innere Kante des Deckenträgers
- 12: Anlage- oder Randflansch des Leuchtengehäuses
- 13: Erster Führungsbolzen
- 14: Zweiter Führungsbolzen
- 16: Nut
- 20: Führungsbereich des Verriegelungselements
- 22: weitere Feder
- 23: Anschlag
- 24: erster Greifvorsprung des Führungsrings
- 25: zweiter Greifvorsprung des Führungsrings
- 30: Sperre des Auslöseelements
- 31: Vorsprung
- 32: Weiterer Vorsprung
- 40: Sperrteil
- 44: weitere Sperre; Sperre des Sperrteils
- 45: weiterer Druckbereich; Druckbereich des Sperrteils
- 50: Gehäusebauteil
- 52: Führungsstift
- 54: Kolbenhülse
- 55: Platte des Führungsstifts
- 56: Abflachung der Platte
- 57: Ausnehmung der Platte, "Mausloch"
- 59: Zapfen
- 60: Vorsprung des Verriegelungselements
- 61: Innere Begrenzungsfläche des Verriegelungselements
- 62: Hohlraum, Kompressionsraum
- 63: Anschlag
- 64: obere Hohlraumbegrenzungswand des Verriegelungselements
- 66: Anlagefläche des Verriegelungselements zur Zusammenwirkung mit der Platte
- 70: O-Ring
- 72: Führungsstange
- 80: erster Hebel
- 81: zweiter Hebel
- 82: erstes Gelenk
- 90: erster Führungsbolzen
- 91: drittes Gelenk
- 92: zweites Gelenk
- 93: zweiter Führungsbolzen
- 94: Schiebeelement
- 96: erste Kulisse
- 97: zweite Kulisse
- 99: Drehbewegung des Verriegelungselements

## Patentansprüche

1. Befestigungselement für eine Einbauleuchte, die zum Einbau in eine
Einbauöffnung vorgesehen ist,
aufweisend
- ein Basisteil (4), und
- ein Verriegelungselement (5), das relativ zu dem Basisteil (4) aus einer Montageposition in eine Verriegelungsposition bewegt werden kann,
wobei eine entsprechende Einbauleuchte, die mit dem Befestigungselement (1) bestückt ist, in die Einbauöffnung eingeführt werden kann, falls sich das Verriegelungselement (5) in der Montageposition befindet, und in einer vorgesehenen Einbauposition in der Einbauöffnung fixiert ist, falls sich das Verriegelungselement (5) in der Verriegelungsposition befindet,
**gekennzeichnet durch**
- Mittel zur selbstständigen Bewegung des Verriegelungselements (5) von der Montageposition in die Verriegelungsposition,
wobei die Mittel zur selbstständigen Bewegung des Verriegelungselements (5) ein Speicherelement für Energie aufweisen,
wobei das Speicherelement mindestens so viel Energie speichern kann, wie zur Durchführung der Bewegung des Verriegelungselements (5) von der Montageposition in die Verriegelungsposition erforderlich ist,
wobei das Speicherelement so viel Energie speichern kann, dass damit zusätzlich eine Fixierung der Einbauleuchte in der Einbauposition möglich ist,
wobei eine doppelte Sperrmöglichkeit (30, 44) der Mittel zur selbstständigen Bewegung des Verriegelungselements (5) von der Montageposition in die Verriegelungsposition vorgesehen ist.

2. Befestigungselement nach Anspruch 1,
bei dem das Speicherelement ein Speicherelement für elektrische Energie oder Deformationsenergie ist.

3. Befestigungselement nach Anspruch 1 oder 2,
bei dem das Speicherelement eine Feder (6), vorzugsweise eine Spiralfeder umfasst.

4. Befestigungselement nach einem der vorhergehenden Ansprüche,
weiterhin aufweisend ein Auslöseelement (7) zur Aktivierung der Mittel zur selbstständigen Bewegung des Verriegelungselements (5).

5. Befestigungselement nach Anspruch 4,
wobei das Auslöseelement (7) derart angeordnet ist, dass die Mittel zur selbstständigen Bewegung des Verriegelungselements (5) aktiviert werden, sobald die mit dem Befestigungselement (1) bestückte Einbauleuchte in die vorgesehene Einbauposition gebracht wird.

6. Befestigungselement nach Anspruch 4 oder 5,
wobei das Auslöseelement (7) derart ausgebildet ist, dass durch einen Druck auf einen Bereich (9) des Auslöseelements (7) die selbstständige Bewegung des Verriegelungselements (5) von der Montageposition in die Verriegelungsposition ausgelöst wird.

7. Befestigungselement nach einem der Ansprüche 4 bis 6,
bei dem das Auslöseelement (7) zwischen einer Auslösebereitschaftsstellung und einer Auslösestellung verschiebbar am Basisteil (4) angeordnet ist, wobei durch eine Bewegung des Auslöseelements (7) von der Auslösebereitschaftsstellung in die Auslösestellung die selbstständige Bewegung des Verriegelungselements (5) von der Montageposition in die Verriegelungsposition ausgelöst wird.

8. Befestigungselement nach Anspruch 7,
bei dem das Auslöseelement (7) in einer Richtung verschiebbar am Basisteil (4) angeordnet ist, die entgegengesetzt zu einer weiteren Richtung verläuft, in der die entsprechende Einbauleuchte auf einem letzten Bewegungsabschnitt bei einer Bewegung in die vorgesehene Einbauposition bewegt wird.

9. Befestigungselement nach einem der vorhergehenden Ansprüche,
weiterhin aufweisend
Dämpfungsmittel (62, 70) zur Dämpfung der Bewegung des
Verriegelungselements (5) von der Montageposition in die
Verriegelungsposition.

10. Befestigungselement nach Anspruch 9,
wobei die Dämpfungsmittel einen Gasdämpfer und/oder eine Reibbremse umfassen.

11. Einbauleuchte,
aufweisend wenigstens ein Befestigungselement nach einem der Ansprüche 1 bis 10.

12. Einbauleuchte, aufweisend wenigstens ein Befestigungselement nach einem der Ansprüche 4 bis 8 und
aufweisend einen Randflansch (12), wobei das Auslöseelement (5) in der vorgesehenen Einbauposition von dem Randflansch (12) verdeckt ist.

## Claims

1. Fastening element for a recessed luminaire, which is provided for installation in an installation opening, comprising
- a base part (4), and
- a locking element (5) which may be moved from a mounting position into a locking position relative to the base part (4)
wherein a corresponding recessed luminaire which is equipped with the fastening element (1) may be inserted into the installation opening if the locking element (5) is in the mounting position, while it is fixed in an installation position provided in the installation opening if the locking element (5) is in the locking position,
**characterized in that**
- means are provided for independent movement of the locking element (5) from the mounting position into the locking position,
wherein the means for independent movement of the locking element (5) comprise a storage element for energy,
wherein the storage element can store at least as much energy as is required to carry out the movement of the locking element (5) from the mounting position into the locking position,
wherein the storage element can store at least as much energy to allow the recessed luminaire to be fixed in the installation position,
wherein a double locking possibility (30, 44) of the means is provided for independent movement of the locking element (5) from the mounting position into the locking position.

2. Fastening element according to claim 1,
wherein the storage element is a storage element for electrical energy or deformation energy.

3. Fastening element according to claim 1 or 2,
wherein the storage element comprises a spring (6), preferably a spiral spring.

4. Fastening element according to one of the preceding claims, further comprising a release element (7) to activate the means for independent movement of the locking element (5).

5. Fastening element according to claim 4,
wherein the release element (7) is so arranged that the means for the independent movement of the locking element (5) are activated as soon as the recessed luminaire fitted with the fastening element (1) is brought into the intended installation position.

6. Fastening element according to claim 4 or 5,
wherein the release element (7) is so designed that the independent movement of the locking element (5) from the mounting position into the locking position is triggered by pressure on a region (9) of the release element (7).

7. Fastening element according to one of the claims 4 to 6,
wherein the release element (7) is arranged between a release standby position and a release position so as to be displaceable on the base part (4), wherein a movement of the release element (7) from the release standby position to the release position causes the independent movement of the locking element (5) from the mounting position into the locking position.

8. Fastening element according to claim 7,
wherein the release element (7) is arranged to be displaceable in a direction on the base part (4) which extends opposite to a further direction in which the corresponding recessed luminaire is moved on a last movement section upon movement into the intended installation position.

9. Fastening element according to one of the preceding claims, further comprising damping means (62, 70) for damping the movement of the locking element (5) from the mounting position into the locking position.

10. Fastening element according to claim 9,
wherein the damping means comprise a gas damper and/or a friction brake.

11. Recessed luminaire, comprising at least one fastening element according to one of claims 1 to 10.

12. Recessed luminaire, comprising at least one fastening element according to one of claims 4 to 8, and comprising an edge flange (12), wherein the release element (5) is covered by the edge flange (12) in the provided installation position.

## Revendications

1. Élément de fixation pour un luminaire encastré, qui est destiné à être encastré dans une ouverture d'encastrement, comprenant
- une partie de base (4) et
- un élément de verrouillage (5) qui peut être déplacé par rapport à la partie de base (4) à partir d'une position de montage vers une position de verrouillage,
un luminaire encastré correspondant, qui est équipé de l'élément de fixation (1), pouvant être inséré dans l'ouverture d'encastrement, dans le cas où l'élément de verrouillage (5) se trouve dans la position de montage et est fixé dans une position d'encastrement prévue dans l'ouverture d'encastrement, dans le cas où l'élément de verrouillage (5) se trouve dans la position de verrouillage,
**caractérisé par**
- des moyens pour le déplacement autonome de l'élément de verrouillage (5) de la position de montage vers la position de verrouillage,
les moyens de déplacement autonome de l'élément de verrouillage (5) comprenant un élément de stockage pour l'énergie,
l'élément de stockage pouvant stocker au moins autant d'énergie qu'il est nécessaire pour la réalisation du déplacement de l'élément de verrouillage (5) de la position de montage vers la position de verrouillage,
l'élément de stockage pouvant stocker autant d'énergie qu'il est nécessaire pour permettre en outre une fixation du luminaire encastré dans la position d'encastrement,
une double possibilité de blocage (30, 44) des moyens de déplacement autonome de l'élément de verrouillage (5) de la position de montage vers la position de verrouillage est prévue.

2. Élément de fixation selon la revendication 1,
dans lequel l'élément de stockage est un élément de stockage pour une énergie électrique ou une énergie de déformation.

3. Élément de fixation selon la revendication 1 ou 2,
dans lequel l'élément de stockage comprend un ressort (6), de préférence un ressort en spirale.

4. Élément de fixation selon l'une des revendications précédentes, comprenant en outre un élément de déclenchement (7) pour l'activation des moyens de déplacement autonome de l'élément de verrouillage (5).

5. Élément de fixation selon la revendication 4,
l'élément de déclenchement (7) étant disposé de façon à ce que les moyens de déplacement autonome de l'élément de verrouillage (5) soient activés dès que le luminaire encastré équipé de l'élément de fixation (1) est amené à la position d'encastrement prévue.

6. Élément de fixation selon la revendication 4 ou 5,
l'élément de déclenchement (7) étant conçu de façon à ce qu'une pression sur une zone (9) de l'élément de déclenchement (7) déclenche le déplacement autonome de l'élément de verrouillage (5) de la position de montage vers la position de verrouillage.

7. Élément de fixation selon l'une des revendications 4 à 6,
dans lequel l'élément de déclenchement (7) est disposé de manière coulissante sur la partie de base (4) entre une position d'attente de déclenchement et une position de déclenchement, le déplacement de l'élément de déclenchement (7) de la position d'attente de déclenchement vers la position de déclenchement déclenchant le déplacement autonome de l'élément de verrouillage (5) de la position de montage vers la position de verrouillage.

8. Élément de fixation selon la revendication 7,
dans lequel l'élément de déclenchement (7) est disposé de manière coulissante dans une direction sur la partie de base (4), qui est opposée à une autre direction dans laquelle le luminaire encastré correspondant est déplacé sur une dernière portion de déplacement lors d'un déplacement vers la position d'encastrement prévue.

9. Élément de fixation selon l'une des revendications précédentes, comprenant en outre
des moyens d'amortissement (62, 70) pour l'amortissement du déplacement de l'élément de verrouillage (5) de la position de montage vers la position de verrouillage.

10. Élément de fixation selon la revendication 9,
les moyens d'amortissement comprenant un amortisseur à gaz et/ou un frein à friction.

11. Luminaire encastré
comprenant au moins un élément de fixation selon l'une des revendications 1 à 10.

12. Luminaire encastré comprenant au moins un élément de fixation selon l'une des revendications 4 à 8 et comprenant une bride de bord (12), l'élément de déclenchement (5) étant recouvert par la bride de bord (12) dans la position d'encastrement prévue.
